(19) Europäisches Patentamt
European Patent Office
Office européen des brevets

(11) Publication number: 0 225 730
A2

(12) # EUROPEAN PATENT APPLICATION

(21) Application number: 86308735.9

(22) Date of filing: 10.11.86

(51) Int. Cl.$^4$: C 09 B 62/026, D 06 P 1/382

(30) Priority: 05.12.85 GB 8530024

(43) Date of publication of application: 16.06.87
Bulletin 87/25

(84) Designated Contracting States: BE CH DE ES FR GB IT LI

(71) Applicant: IMPERIAL CHEMICAL INDUSTRIES PLC, Imperial Chemical House Millbank, London SW1P 3JF (GB)

(72) Inventor: Mistry, Prahalad Manibhai, 13 Glendon Crescent, Ashton-under-Lyne Tameside 0L6 8XU (GB)
Inventor: Taylor, John Anthony, 20 Branksome Avenue, Prestwich Manchester M25 5AG (GB)

(74) Representative: Stephenson, Kenneth et al, Imperial Chemical Industries PLC Legal Department: Patents PO Box 6 Bessemer Road, Welwyn Garden City Herts, AL7 1HD (GB)

(54) **Reactive Dyes.**

(57) A reactive dye of the formula:

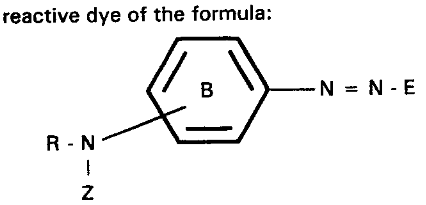

wherein the RZN-group is in a meta or para position relative to the azo group, R represents an optionally substituted alkyl radical, Z represents a 4,6-dichloro-s-triazin-2-yl, 4-amino-6-fluoro-s-triazin-2-yl, dichlorocyanopyrimidinyl or chlorodifluoropyrimidinyl radical, ring B may be further substituted and E represents the residue of a coupling component containing at least one sulphonic acid group.

EP 0 225 730 A2

REACTIVE DYES

This invention relates to reactive dyes and more particularly to water-soluble reactive dyes of the azo series, their manufacture and their application to textile substrates.

According to the invention, there are provided reactive dyes of the formula:

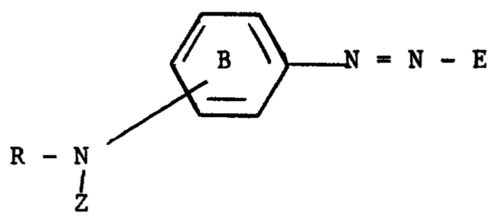

(I)

wherein the RZN- group is in a meta or para position relative to the azo group, R represents an optionally substituted alkyl radical, Z represents a 4,6-dichloro-s-triazin-2-yl, 4-amino-6-fluoro-s-triazin-2-yl, dichlorocyanopyrimidinyl or chlorodifluoropyrimidinyl radical, ring B may be further substituted and E represents the residue of a coupling component containing at least one sulphonic acid group.

Alkyl groups which may be represented by R include $C_{1-4}$ alkyl groups which may optionally carry substituents such as hydroxy, cyano, carbonyl, carboxy, sulpho, sulphato, phenyl and substituted phenyl groups.

Substituents which may be present in ring B include sulpho, carboxy, alkyl, alkoxy, halogen and nitro. Preferred alkyl and alkoxy groups are $C_{1-4}$ alkyl and alkoxy groups.

The symbol E in Formula I represents the residue of a sulphonated coupling component of, for example, the acetoacetanilide, pyrazolone, aminopyrazole, 2,6-dihydroxypyridine, 2,6-diaminopyridine, aminopyrimidine, barbituric acid, phenol, naphthol or aminonaphthol series. Where appropriate, the residue of the

coupling component may contain an azo group. Thus, E may represent a residue of the formula:

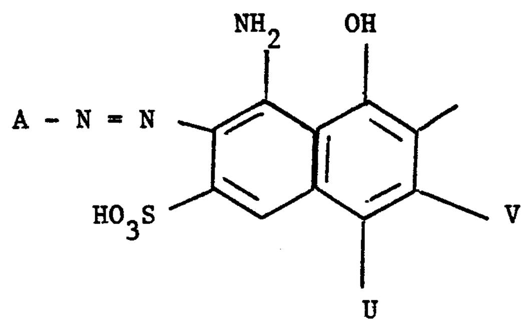

(II)

wherein A represents a phenyl or naphthyl radical optionally carrying one or more substituents selected from halogen, lower alkyl, lower alkoxy, nitro, sulpho, carboxy or phosphono and one of U and V is $-SO_3H$, the other being H.

Thus, a preferred class of reactive dyes within the scope of Formula I comprises the disazo dyes of the formula:

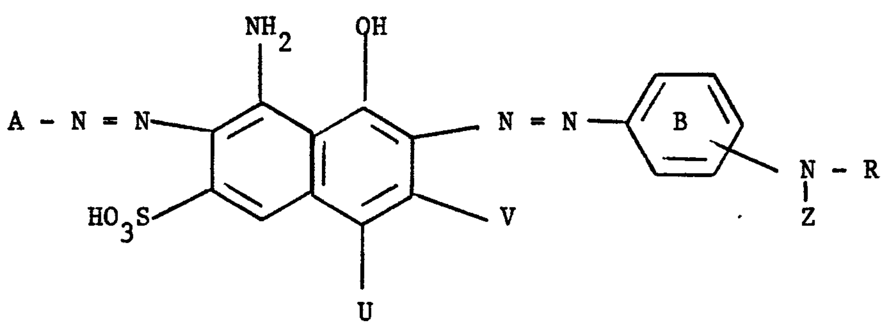

(III)

wherein A, U, V, B, R and Z have the meanings given above.

The dyes of Formula I may be prepared by reacting an azo dye of the formula:

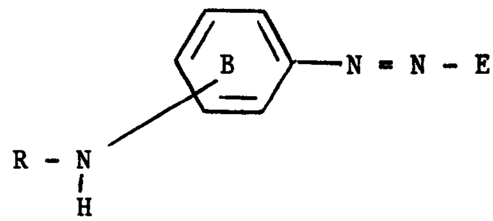

(IV)

wherein R, B and E have the meanings given above with cyanuric chloride, 2-amino-4,6-difluoro-s-triazine, 2,4,6-trichloro-5-cyanopyrimidine or 5-chloro-2,4,6-trifluoropyrimidine.

Reaction between the heterocyclic compound and the dye of Formula IV may conveniently be performed in an aqueous medium, optionally in the presence of a water-soluble organic solvent, at a temperature of from 0 to 40°C and preferably in the presence of an acid-binding agent to maintain the pH of the reaction mixture in the range 5-8. Suitable acid-binding agents include alkali metal hydroxides, carbonates and bicarbonates.

Dyes of Formula IV may themselves be obtained by hydrolysis of dyes of the formula:

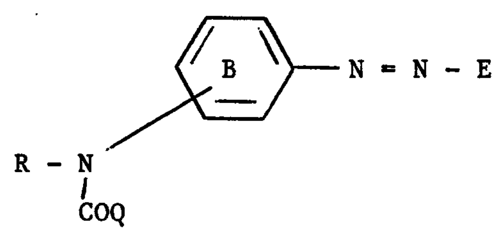

(V)

wherein R, B and E have the meanings given above and Q represents a hydrocarbyl radical, for example a lower alkyl radical.

Dyes of Formula V may in turn be obtained by diazotising a primary aromatic amine of the formula:

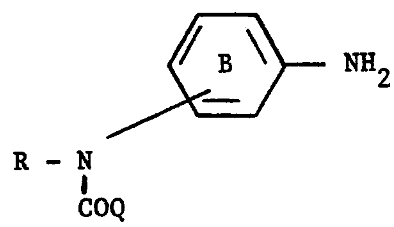

(VI)

wherein R, B and Q have the meanings given above, and coupling the diazonium compound so formed with a coupling component containing at least one sulphonic acid group.

Examples of primary aromatic amines of Formula VI include N-methyl-N-acetyl-p-phenylene diamine and N-methyl-N-acetyl-m-phenylene diamine.

Examples of coupling components which may be used to make monoazo dyes of Formula V include sulphonated naphthols such as 1-naphthol-4- and 5-sulphonic acids; 1-naphthol-3,6-, 3,8-, 4,6-, 4,7- and 4,8-disulphonic acids; 1-naphthol-3,6,8-trisulphonic acid; 2-naphthol-7-sulphonic acid; 2-naphthol-3,6-, 3,7-, 4,8-, 5,7- and 6,8-disulphonic acids and 2-naphthol-3,6,8-trisulphonic acid. Other useful coupling components include phenylpyrazolones of the formula:

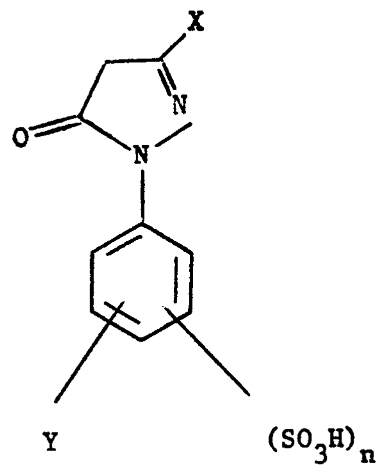

(VII)

wherein X represents hydrogen, methyl or carboxy, Y represents hydrogen, halogen, alkyl or alkoxy and n represents 1, in which case

the sulphonic acid group may be ortho, meta or para to the nitrogen atom, or 2 in which case the sulphonic acid groups are in the 2,4-, 2,5- or 3,5- positions relative to the nitrogen atom.

Examples of coupling components which may be used to make disazo dyes of Formula V include monoazo compounds of the formula:

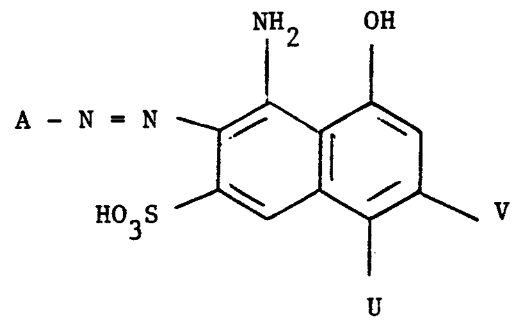

(VIII)

wherein A, U and V have the meanings given above. The monoazo compounds of Formula VIII may be obtained by diazotising a primary aromatic amine of the formula:

$$ANH_2 \qquad (IX)$$

and coupling the resulting diazonium compound under acid conditions with 1-amino-8-naphthol-3,6- or 4,6-disulphonic acid.

Useful amines of Formula IX include orthanilic acid, sulphanilic acid, aniline-2,5-disulphonic acid, aniline-2,4-disulphonic acid, aniline-3,5-disulphonic acid, 2-chloroaniline, 2-amino-5-sulphobenzoic acid, 2-amino-5-nitrobenzene sulphonic acid, 2-amino-4-nitrobenzene sulphonic acid, 2-amino-5-methoxybenzene sulphonic acid, 3,5-dichloro-4-aminobenzene sulphonic acid, 4-nitro-4'-aminostilbene-2,2'-disulphonic acid, 3-bromo-4-aminobenzene sulphonic acid, 3-methyl-4-aminobenzene sulphonic acid, 2-amino-5-methylbenzene sulphonic acid, 4-nitroaniline, 3-methyl-4-amino-5-chlorobenzene sulphonic acid, 2-aminonaphthalene-3,6,8-trisulphonic acid, 2-aminonaphthalene-4,8-disulphonic acid, 2-aminonaphthalene-6,8-disulphonic acid, 2-aminonaphthalene-1,5-

disulphonic acid, 2-aminonaphthalene-1-sulphonic acid, 1-aminonaphthalene-2,5,7-trisulphonic acid, 1-aminonaphthalene-3,6,8-trisulphonic acid and 2-aminonaphthalene-6-sulphonic acid.

The reactions leading to the formation of the dyes of the invention may be performed using conditions that have been fully described in the prior art for such reactions. Similarly, the dyes may be isolated by known methods, for example spray drying or precipitation and filtration. As in the case of other dyes containing sulphonic acid groups, it is often convenient to isolate and use the dyes in the form of their water-soluble salts, particularly their alkali metal (especially sodium) or ammonium salts. It is to be understood that the invention relates to both the free acids and their salts.

The dyes of the present invention may be used for colouring a wide range of textile materials containing hydroxyl or amino groups, for example wool, silk, synthetic polyamides and natural or regenerated cellulose, for example cotton or viscose rayon materials, by conventional methods used for colouring such materials with water-soluble reactive dyes. Thus, in the case of cellulose they are preferably applied in conjunction with a treatment with an acid binding agent such as caustic soda, sodium carbonate, phosphate, silicate or bicarbonate, which may be applied to the cellulose textile materials before, during or after the application of the dyestuff.

The dyes of the present invention are valuable reactive dyes for cellulose. They yield coloured textiles with good resistance to washing and light. They are particularly characterised by good strength and an ability to build-up in exhaust and pad-batch dyeing to heavy depths of shade. In this last respect they show unexpected superiority over closely related known dyes, especially those dyes in which the heterocyclic fibre-reactive group is attached to the azo structure by means of an -NH- linkage. This ability to build up to heavy depths of shade is particularly useful in the case of the disazo dyes of Formula III which are useful for providing black shades.

The invention is illustrated but not limited by the following Examples in which all parts and percentages are by weight.

Example 1

2,5-disulpho aniline → $NH_2$ OH H Acid ← 4-(3,5-dichlorotriazinyl-N-methylamino)-aniline

N-Acetyl-N-methyl-p-phenylene diamine (18 parts at 62% strength) was stirred in water (300 parts) and hydrochloric acid (36°Tw, 30 parts). 2N Sodium nitrite solution (55 parts) was added dropwise at 0 to 5°C. After 15 minutes, excess nitrous acid was destroyed and the resulting solution of diazonium salt was added slowly, at 0 to 5°C and pH 6 to 7, to a solution of the tetrasodium salt of 1-amino-2-(2',5'-disulphophenylazo)-8-hydroxynaphthalene-3,6-disulphonic acid (71.1 parts at 94% strength). After cooling the mixture was acidified to pH 1 with hydrochloric acid (36°Tw) and the resulting dyebase was collected.

Yield 51.3 parts at 83% strength.

A solution of cyanuric chloride (5.71 parts) in acetone (50 parts) was added to a solution of the above dyebase (24.6 parts) at 0 to 5°C and pH 6 to 7. After 30 minutes, condensation was essentially complete: acetone was added and the precipitated dyestuff was collected and dried.

Yield 29.5 parts at 86% strength.

$\lambda$max 613 nm.

The product dyes cotton a navy blue shade which builds up well to heavy depths.

Example 2

2,5-disulpho aniline → $NH_2$ OH H Acid ← 4-(4,6-dichloro-5-cyano-pyrimidin-2-yl-N-methylamino)-aniline

A solution of 2,4,6-trichloro-5-cyanopyrimidine (7 parts) in acetone (50 parts) was added at pH 6.5 and at 0 to 5°C to a solution of 24.6 parts of the dyebase described in Example 1. The pH was allowed to fall to 3.0 and the temperature was raised to 30°C.

After 1 hour acetone was added and the precipitated dye was collected.

Yield 25.7 parts at 74% strength.

λmax 617 nm.

Example 3

4-sulpho aniline → NH2 OH H Acid ← 4-(3,5-dichlorotriazinyl-N-methylamino)-aniline

A solution of N-acetyl-N-methyl-p-phenylene diamine (18 parts at 62% strength) was diazotised as in Example 1 and coupled onto a solution of the trisodium salt of 1-amino-2-(4'-sulphophenylazo)-8-hydroxynaphthalene-3,6-disulphonic acid (96.1 parts at 56% strength). The resulting acetylated disazo derivative was hydrolysed with 2N sodium hydroxide solution to give the required dyebase.

Yield 129 parts at 40% strength.

This (55.3 parts) was condensed with cyanuric chloride (6.7 parts) under conventional conditions (pH 6.5, 0 to 5°C) to give the desired product.

Yield 30 parts at 62% strength.

λmax 603 nm.

Example 4

2-methyl-4-sulphoaniline → NH2 OH H Acid ← 4-(3,5-dichlorotriazinyl-N-methylamino)-aniline

N-Acetyl-N-methyl-p-phenylene diamine (11.51 parts at 62% strength) was diazotised as in Example 1, and the resulting solution added, at pH 6.5, to a stirred solution of the trisodium salt of 1-amino-2-(2'-methyl-4'-sulphophenylazo)-8-hydroxynaphthalene-3,6-disulphonic acid (22.93 parts at 83% strength). After stirring for 30 minutes, at 0 to 5°C and pH 6 to 7, the solution was allowed to warm to 20°C, salt (20% w/v) was added and the precipitated solid was collected. This solid was dissolved in 2N sodium hydroxide (600 parts) and the resulting solution was heated at 70°C for

2 hours. After neutralising with concentrated hydrochloric acid (36°Tw) the resulting mixture was allowed to cool with stirring and the solid dyebase was collected.

Yield 19 parts at 79% strength.

17.84 Parts of the above dyebase were converted to the dichlorotriazinyl dye by condensation with cyanuric chloride as described in Example 1.

Yield 25 parts at 67% strength.

λmax 597 nm.

Example 5

3(3,5-dichlorotriazinyl-N-methylamino)aniline → 1-hydroxy-3,6-disulpho-naphthalene

Cyanuric chloride (3.4 parts) dissolved in acetone (40 parts) was added to a solution of 1-hydroxy-2-(3'-methylaminophenylazo)-naphthalene-3,6-disulphonic acid (10.46 parts at 68% strength) in water at 0 to 5°C. The pH was maintained at 6 to 7 with 2N sodium carbonate solution. After 15 minutes, condensation was essentially complete. Mixed phosphate buffer (3 parts) was added, followed by salt (30 parts, 10% w/v) : the mixture was stirred for a further 0.5 hr. and solid was collected and dried.

Yield 14.7 parts at 60% strength.

λmax 483 nm.

The product dyed cotton a bright orange shade with good build up.

Example 6

2-sulpho-4-nitroaniline → $NH_2$ OH H Acid ← 4-(3,5-dichlorotriazinyl-N-methylamino)-aniline

To a stirred solution of 1-amino-2-(2'-sulpho-4'-nitrophenylazo)-8-hydroxynaphthalene-3,6-disulphonic acid (26.16 parts at 70% strength) was added, at pH 7, a solution of the diazonium salt of N-acetyl-N-methyl-p-phenylene diamine (9.75 parts at 61.7% strength). The mixture was stirred at pH 6.5 for 1 hour, salt (20% w/v) was added and acetylated dyebase was collected.

The damp filter cake was slurried in 2N hydrochloric acid (1000 parts) and the temperature raised to 75° over 15 minutes. After a further 2 hours at 75 to 80°C, hydrolysis was complete : the mixture was allowed to cool and solid was collected.

Yield 12.5 parts at 73% strength.

This was dissolved in dilute sodium hydroxide to give a solution of pH 7. Cyanuric chloride (2.5 parts) in acetone (30 parts) was added at pH 6.5 and 0 to 5°C. Mixed phosphate buffer (5 parts) was added, the mixture was filtered and salt (25% w/v) was added to the filtrate. The precipitated dye was collected and dried.

Yield 13.4 parts at 73% strength.

$\lambda$max 637 nm.

<u>Example 7</u>

2-chloro aniline → $NH_2$ OH H Acid ← 4-(3,5-dichlorotriazinyl-N-methylamino)-aniline

Cyanuric chloride (5 parts) in acetone (50 parts) was added dropwise to a cold solution of the disodium salt of 1-amino-2-(2'-chlorophenylazo)-7-(4"-methylaminophenylazo)-8-hydroxynaphthalene-3,6-disulphonic acid (21.85 parts at 85% strength) at pH 6 to 7. After 30 minutes, the mixture was allowed to warm to 20°C, mixed phosphate buffer (5 parts) was added followed by salt (5% w/v). The precipitated dye was collected and dried.

Yield 9.5 parts at 63% strength.

$\lambda$max 597 nm.

<u>Example 8</u>

4-sulpho aniline → $NH_2$ OH H Acid ← 2-sulpho-5-(3,5-dichlorotriazinyl-N-hydroxyethylamino)-aniline

A solution of cyanuric chloride (2.5 parts) in acetone (25 parts) was added to a solution of 1-amino-2-(4'-sulpho-phenylazo)-7-[2"-sulpho-5"-(beta-hydroxyethylamino)phenylazo]-8-hydroxynaphthalene-3,6-disulphonic acid (18.7 parts) at pH 6.5 and at 0 to 5°C. After 30 minutes, acetone (2000 parts) was added and the precipitated solid was collected and dried.

Yield 20.9 parts at 46% strength.

λmax 593 nm.

Example 9

4-sulpho aniline → $NH_2$ OH H Acid ← 5-(3,5-dichlorotriazinyl-N-hydroxyethylamino)-aniline

A solution of cyanuric chloride (4 parts) dissolved in acetone (40 parts) was added at 0 to 5°C to a solution of 1-amino-2-(4'-sulphophenylazo)-7-[4"-(beta-hydroxyethylamino)phenylazo]-8-hydroxynaphthalene-3,6-disulphonic acid. The pH was maintained at 6 to 7 with 2N sodium carbonate solution. After 30 minutes, the condensation was complete and the product was precipitated by adding acetone.

Yield 24.2 parts at 70% strength.

λmax 598 nm.

Example 10

4(3,5-dichlorotriazinyl-N-methylamino)aniline → 1-(4-sulphophenyl)-3-carboxy pyrazolin-5-one

Cyanuric chloride (32 parts) dissolved in acetone (300 parts) was added to a solution of 1-(4'-sulphophenyl)-3-carboxy-4-(4"-methylamino)phenylazo-pyrazol-5-one (120.16 parts at 70% strength) at 0 to 5°C and pH 6 to 7. After 30 minutes, the condensation was complete; mixed phosphate buffer (12 parts) was added, the mixture was allowed to warm to 20°C with stirring, solid was collected, washed and dried.

Yield 115 parts at 81% strength.

λmax 435 nm.

By similar procedures the following dyes of Formula I were prepared.

Pos. = position of group $R-\underset{\substack{|\\ Z}}{N}-$ relative to azo linkage.

Other subs. = other substituents in ring B

| Ex | Pos. | Other Subs. | R | Z | E | Shade |
|---|---|---|---|---|---|---|
| 11 | 4 | None | methyl | 2,4-dichloro-s-triazin-6-yl | 2-hydroxy-6-sulpho-naphth-1-yl | Reddish orange |
| 12 | 4 | " | " | " | 1-hydroxy-3,6,8-trisulpho-naphth-2-yl | Bluish red |
| 13 | 4 | " | " | " | 1-hydroxy-3,6-disulpho-naphth-2-yl | Yellowish red |
| 14 | 3 | 6-sulpho | beta-hydroxy ethyl | 4,6-dichloro-5-cyano-pyrimidin-2-yl | 2-hydroxy-6-sulpho-naphth-1-yl | Orange |
| 15 | 3 | None | methyl | " | 1-hydroxy-3,6,8-trisulpho-naphth-2-yl | Bluish red |
| 16 | 3 | 6-sulpho | " | 2,4-dichloro-s-triazin-6-yl | 1-hydroxy-4-sulpho-naphth-2-yl | Reddish orange |
| 17 | 4 | " | benzyl | " | 1-hydroxy-3,8-disulpho-naphth-2-yl | Red |
| 18 | 3 | 6-methyl | methyl | 2,4-difluoro-5-chloro-pyrimidin-6-yl | 1-hydroxy-3,6-disulpho-naphth-2-yl | Yellowish red |

| Ex | Pos. | Other Subs. | R | Z | E | Shade |
|---|---|---|---|---|---|---|
| 19 | 4 | None | methyl | 2,4-dichloro-s-triazin-6-yl | 1-hydroxy-4,6-disulpho-naphth-2-yl | Reddish orange |
| 20 | 3 | methoxy | benzyl | " | 1-hydroxy-4,7-disulpho-naphth-2-yl | Reddish orange |
| 21 | 4 | None | methyl | " | 1-hydroxy-4,8-disulpho-naphth-2-yl | Red |
| 22 | 4 | 2-nitro | " | " | 2-hydroxy-4,8-disulpho-naphth-2-yl | Bluish red |
| 23 | 4 | None | " | 2-fluoro-4-amino-s-triazin-6-yl | 1-hydroxy-3,6-disulpho-naphth-2-yl | Red |
| 24 | 4 | " | beta-hydroxy ethyl | 2,4-dichloro-s-triazin-6-yl | 2-hydroxy-3,6-disulpho-naphth-2-yl | Red |
| 25 | 4 | " | ethyl | " | " | Red |
| 26 | 3 | 6-sulpho | methyl | " | 1-ethyl-2-hydroxy-3-carbonamido 4-methyl-pyrid-6-one-5-yl | Greenish yellow |
| 27 | 3 | " | " | " | 2-ethylthio 4,6-dihydroxy-pyrimidin-5-yl | Mid yellow |

| Ex | Pos. | Other Subs. | R | Z | E | Shade |
|---|---|---|---|---|---|---|
| 28 | 3 | 6-sulpho | methyl | 2,4-dichloro-s-triazin-6-yl | 1-(p-sulpho phenyl)-3-carboxy-pyrazol-5-on-4-yl | Greenish yellow |
| 29 | 3 | " | " | " | acetoacet-3-sulpho-anilide | Greenish yellow |
| 30 | 3 | " | " | " | 2,4,6-tri-hydroxy-pyrimidin-5-yl | Greenish Yellow |

Examples of dyes of Formula (III) are listed below.

| Ex | A | U | V | Pos. | Other Subs. | Z | R | Shade |
|---|---|---|---|---|---|---|---|---|
| 31 | 4-sulpho phenyl | H | sulpho | 4 | None | 4,6-di-chloro-5-cyano-pyrimid-in-6-yl | methyl | Navy |
| 32 | 2,5-di-sulpho-phenyl | " | " | 3 | 6-sulpho | 2,4-di-chloro-s-triazin 6-yl | beta-hydroxy ethyl | " |
| 33 | " | " | " | 4 | " | " | " | " |
| 34 | 4-sulpho phenyl | " | " | 4 | " | " | " | " |
| 35 | " | " | " | 3 | None | " | " | " |
| 36 | 2-sulpho-4-methyl phenyl | " | " | 4 | " | " | methyl | " |
| 37 | 4-nitro phenyl | " | " | 4 | " | " | " | Greenish blue |

| Ex | A | U | V | Pos. | Other Subs. | Z | R | Shade |
|---|---|---|---|---|---|---|---|---|
| 38 | 2-sulpho phenyl | H | sulpho | 4 | None | 2,4-di-chloro-s-triazin-6-yl | methyl | Navy |
| 39 | 2,6-di chloro-4-sulpho phenyl | " | " | 4 | " | " | " | Reddish blue |
| 40 | 2,5-di-chloro-4-sulpho phenyl | " | " | 4 | " | " | " | Navy |
| 41 | 2-carboxy 4-sulpho phenyl | " | " | 4 | " | " | " | " |
| 42 | 2-sulpho 5-N-(4',6'-dichloro-s-triazin-2'-yl)-N-(beta-hydroxy-ethyl) aminophenyl | " | " | 3 | 6-sulpho | " | beta-hydroxy ethyl | " |
| 43 | 4-sulpho phenyl | " | " | 3 | None | " | methyl | " |
| 44 | 2,5-di-sulpho phenyl | " | " | 3 | " | " | " | " |
| 45 | 3,6,8-tri-sulpho-naphth-2-yl | " | " | 4 | " | " | " | " |

| Ex | A | U | V | Pos. | Other Subs. | Z | R | Shade |
|---|---|---|---|---|---|---|---|---|
| 46 | 2-chloro-5-sulpho phenyl | H | sulpho | 4 | None | 2,4-di-chloro-s-triazin-6-yl | methyl | Navy |
| 47 | 2,6-di-bromo-4-sulpho-phenyl | " | " | 4 | " | " | " | Reddish blue |
| 48 | 2-chloro-4-sulpho phenyl | " | " | 4 | " | " | " | Navy |
| 49 | 2-chloro phenyl | " | " | 3 | " | " | " | " |
| 50 | 2-bromo-4-sulpho phenyl | " | " | 4 | " | " | " | " |
| 51 | 2-bromo phenyl | " | " | 4 | " | " | " | " |
| 52 | 2-sulpho-5-N-(4',6'-dichloro-s-triazin-2-yl)-N-(beta-hydroxy-ethyl) aminophenyl | " | " | 4 | " | " | " | " |
| 53 | 2-sulpho-5-nitro phenyl | " | " | 4 | " | " | " | " |
| 54 | 2,5-di-sulpho phenyl | sulpho | H | 4 | " | " | " | " |

| Ex | A | U | V | Pos. | Other Subs. | Z | R | Shade |
|---|---|---|---|---|---|---|---|---|
| 55 | 2,5-di-sulpho phenyl | sulpho | H | 3 | 6-sulpho | 4,6-di-chloro-5-cyano pyrimidin-2-yl | methyl | Navy |
| 56 | 4-sulpho phenyl | H | sulpho | 4 | None | 2,4-di-fluoro-5-chloro-pyrimidin-6-yl | " | " |

CLAIMS

1. A reactive dye of the formula:

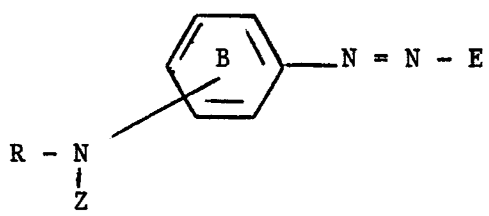

wherein the RZN- group is in a meta or para position relative to the azo group, R represents an optionally substituted alkyl radical, Z represents a 4,6-dichloro-s-triazin-2-yl, 4-amino-6-fluoro-s-triazin-2-yl, dichlorocyanopyrimidinyl or chlorodifluoropyrimidinyl radical, ring B may be further substituted and E represents the residue of a coupling component containing at least one sulphonic acid group.

2. A reactive dye according to claim 1 wherein R is a $C_{1-4}$ alkyl group.

3. A reactive dye according to claim 1 wherein R is a beta-hydroxyethyl or benzyl group.

4. A reactive dye according to claim 1 wherein any substituents present on ring B are selected from sulpho, carboxy, alkyl, alkoxy, halogen and nitro.

5. A reactive dye according to claim 1 having the formula:

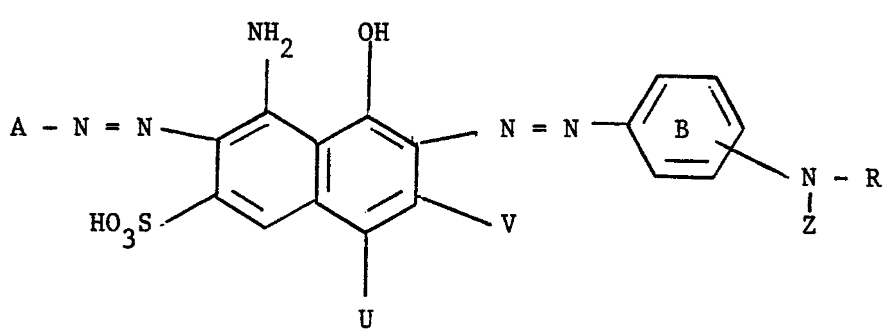

wherein R, Z and B are as defined in claim 1, A represents a phenyl or naphthyl radical optionally carrying one or more substituents

selected from halogen, lower alkyl, lower alkoxy, nitro, sulpho, carboxy or phosphono and one of U and V is $-SO_3H$, the other being H.

6. A method for the preparation of a reactive dye as defined in claim 1 which comprises reacting an azo dye of the formula:

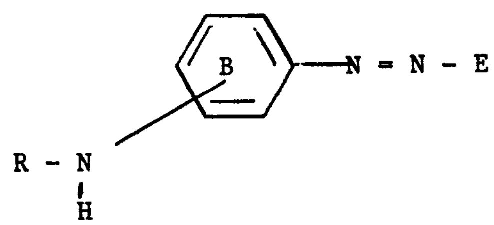

wherein R, B and E have the meanings given in claim 1 with cyanuric chloride, 2-amino-4,6-difluoro-s-triazine, 2,4,6-trichloro-5-cyanopyrimidine or 5-chloro-2,4,6-trifluoropyrimidine.

7. A process for coloring textile materials which comprises applying thereto a reactive dye as defined in claim 1.

8. A process according to claim 7 wherein the dye is applied to a cellulosic textile material in conjunction with an acid binding agent.